# EUROPÄISCHE PATENTSCHRIFT

(11) **EP 2 162 360 B1**
(45) Veröffentlichungstag und Bekanntmachung des Hinweises auf die Patenterteilung: **16.05.2012**
(21) Anmeldenummer: 08735979.0
(22) Anmeldetag: 09.04.2008
(51) Int. Cl.: B65C 9/20, C09J 7/00, C09J 7/02

(54) **ETIKETTEN MIT WASSERLÖSBAREN UV-HÄRTENDEN KLEBSTOFFEN**
LABELS WITH WATER-SOLUBLE UV CURABLE ADHESIVES
ÉTIQUETTES À ADHÉSIFS HYDROSOLUBLES DURCISSABLES AUX UV

(30) Priorität: 29.06.2007 DE 102007030407
(43) Veröffentlichungstag der Anmeldung: 17.03.2010
(73) Patentinhaber: Henkel AG & Co. KGaA, 40589 Düsseldorf (DE)
(72) Erfinder: TÖNNIESSEN, Holger, 52382 Niederzier (DE); SEILER, Annie, 40225 Düsseldorf (DE); RAUBERGER, Rainer, 40597 Düsseldorf (DE); GRAUEL, Ralf, 40724 Hilden (DE)
(86) Internationale Anmeldenummer: PCT/EP2008/054253
(87) Internationale Veröffentlichungsnummer: WO 2009/003737

(56) Entgegenhaltungen:
- EP-A- 0 303 430
- EP-A- 0 342 808
- WO-A-97/31076
- WO-A-97/35290
- WO-A-02/074874
- WO-A-2004/106168
- US-A- 5 674 626
- US-A- 5 985 074
- US-B1- 6 379 766

## Beschreibung

Die Erfindung betrifft ein Verfahren zum Verkleben von Etiketten auf Substraten, wobei der Klebstoff ein strahlenhärtbarer Haftklebstoff ist, der durch wässrige alkalische Lösungen von der Substratoberfläche gelöst werden kann. Weiterhin betrifft die Erfindung ein mit einem wieder lösbaren strahlenhärtbaren Haftklebstoff beschichtetes Etikett, das ablösbar auf Substrate mit einer harten Oberfläche verklebt werden kann. Weiterhin wird ein in wässrigen Lösung lösbarer strahlenhärtbarer Haftklebstoff beschrieben.

In der WO 97/01483 wird ein Klebstoffsystem zum Verkleben von Etiketten beschrieben, wobei ein flüssiger Mitnahmeklebstoff und ein Überlappungsklebstoff beschrieben werden, die die Substrate on-line miteinander verkleben. Diese sollen in Laugen löslich sein, d.h. in alkalischer Natronlauge bei erhöhter Temperatur löst sich der Klebstoff ab und damit kann das Etikett von dem Substrat entfernt werden. Eine genauere Charakterisierung der zu verklebenden Etiketten wird nicht beschrieben.

Die US 3,891,584 beschreibt einen wasserdispergierbaren Schmelzklebstoff, der 75 bis 95 Teile eines Pfropfcopolymeren aus etwa 40-80 % Vinylmonomer und etwa 20-60 Gew.-% wasserlöslichen Polyalkylenoxid-Polymer und 5-25 Gew.-% klebrigmachendes Harz enthält. Das Vinyl-Monomer ist vorzugsweise Vinylacetat oder ein niedrigmolekulares Alkyl-substituiertes Acrylat. Der Schmelzklebstoff dient unter anderem zum Etikettieren von Mehrwegflaschen bei hohen Geschwindigkeiten. Die Etiketten können durch kurzes Einweichen in heißem Wasser abgelöst werden.

In der WO 2004/069950 wird ein Verfahren zum Anbringen eines transparenten Etiketts auf einem Substrat beschrieben, wobei das Substratmaterial in Form einer Folie vorliegt, die einen definierten Wasseraufnahme-Wert (Cobb-Wert) aufweisen muss und wobei der Film eine Wasserdampfdurchlässigkeit zwischen 5 bis 2.000 g/m² aufweisen soll. Als Klebstoff wird ein flüssiger Klebstoff mit einer Viskosität zwischen 1 bis 500 Pas beschrieben, wobei als Klebstoffe wässrige Leime beschrieben werden auf Basis von Stärke, Casein, EVA, PVA oder anderen Polymeren. Die Etiketten müssen einen hohen Cobb-Wert aufweisen, da das Etikettenmaterial die Feuchtigkeit des wässrigen Klebstoffs aufnehmen soll.

In der noch nicht veröffentlichten DE 102006042074, werden wasserlösliche Haftschmelzklebstoffe beschriebenen sowie deren Verwendung zum Verkleben von wieder lösbaren Etiketten. Dabei werden ausgewählte wasserdurchlässige Etikettenmaterialien beschrieben sowie nicht reaktive thermoplastische Klebstoffe.

Die US 6379766 beschreibt "Ink only labels", die auf ein Substrat aufgebracht werden und durch Waschen mit einer alkalischen wässrigen Lösung entfernt werden können. Es wird dort beschrieben, dass das Etikett kein Papier- oder Plastikträgersubstrat aufweist, sondern zusätzlich nur eine bildgebende Schicht aus Tinte umfasst. Dabei wird das Etikett durch eine Transferfolie auf das Substrat übertragen, wobei sich das Etikett dabei von der Transferfolie löst. Es werden also keine Etiketten beschrieben, die aus einer Klebstoffschicht auf einer Folie oder Mehrschichtfolie bestehen.

Es ist bekannt das Auftragen von flüssigen, insbesondere wässrigen Klebstoffen auf Etiketten so durchzuführen, dass die Etiketten on-line mit dem Klebstoff beschichtet und unmittelbar danach auf das Substrat geklebt werden. Das führt beim Wechsel von Etiketten zu zeitverzögemden Arbeitsschritten. Wenn Fehler bei dem Klebstoffauftrag auftreten wird der Produktionsprozess, z.B. der Flaschen, unterbrochen.

Ein weiterer Nachteil der bekannten Verfahren liegt darin, dass Etiketten häufig aus Folien hergestellt werden, die für eine wässrige Waschlauge nicht oder nur schwer durchlässig sind. Dabei ist es möglich, dass die Waschlauge am Rande des Etikett zwischen Etikett und Substrat eindringt, dort den Klebstoff löst, was aber im allgemeinen nicht zum vollständigen Ablösen des Etiketts führt. Eine entsprechende Ablösung des Etikettes durch alkalisch wässrige Lösungen geht günstig mit Papieretiketten, die aber nicht durchsichtig und deswegen für viele Anwendungen weniger vorteilhaft sind.

Weiterhin ist das Auftragen von Schmelzklebstoffen aufwendig, da dabei der Klebstoff erwärmt werden muss, und sich während der Verarbeitungszeit nicht zersetzen soll. Das kann zu schlechter Haftung führen, auch kann eine Verfärbung des Klebstoffs auftreten.

Ausgehend von den bekannten Klebstoffen und Applikationsverfahren ergibt sich die Aufgabe, ein Verfahren zum Verkleben von Etiketten zur Verfügung zu stellen, bei dem beliebige Substrate, insbesondere wasserabweisende Substrate, mit einem Etikett verklebt werden können, wobei das Etikett separat vor der Verklebung bereits mit einem Haftklebstoff beschichtet werden kann, und die verklebten Etiketten in feuchter Umgebung eine gute Haftung zum Substrat zeigen und später in wässriger alkalischer Lösung vollständig vom Substrat entfernt werden können. Dabei sollen die Applikationsbedingungen des Klebstoffs diesen möglichst wenig beanspruchen.

Die erfindungsgemäße Lösung dieser Aufgabe ist den Patentansprüchen zu entnehmen. Sie besteht im Wesentlichen in einem Verfahren, bei dem geeignetes Etikettenmaterial, das einen Durchtritt von Wasser durch die Oberfläche in kurzer Zeit gestattet, mit einem geeigneten strahlenvemetzbaren Haftklebstoff beschichtet wird, dieser durch aktinische Strahlung vernetzt wird und danach auf ein Substrat verklebt wird, wobei der Klebstoff eine gute Wasserlöslichkeit besitzt.

Ein weiterer Gegenstand der Erfindung sind selbstklebende Etiketten, die mit einem wasserlöslichen Haftklebstoffschicht beschichtet sind. Es wird dafür ein strahlenhärtender Haftklebstoff beschrieben, der eine ausreichende Wasserlöslichkeit in alkalischer Lösung aufweist und eine vollständige Wiederablösung des Klebstoffs von dem Substrat ermöglicht.

Unter wasserlöslich soll in dieser Erfindung verstanden werden, dass der Klebstoff oder eine Klebstoffkomponente wasserlöslich, wasserdispergierbar oder emulgierbar ist. Das kann als grobteilige Dispersion oder auch als kolloidale Lösung geschehen. Das Lösen kann allgemein in wässriger Phase durchgeführt werden, bevorzugt in alkalischen Lösungen. Der Vorgang kann auch durch Temperaturen bis zu 95°C unterstützt werden und findet bevorzugt zwischen ca. 50 bis 90°C statt.

Nach dem erfindungsgemäßen Verfahren ist es möglich, den Haftklebstoff auf das Substrat, beispielsweise eine Flasche oder Dose, aufzutragen und dann mit einem erfindungsgemäß ausgestalteten Etikett zu verkleben. Bevorzugt ist jedoch die Arbeitsweise, dass das Etikett zuerst mit einem geeigneten Haftklebstoff beschichtet wird.

Die erfindungsgemäß zu verwendenden Haftklebstoffe werden zum Verkleben auf unterschiedlichen Substraten eingesetzt, insbesondere sind sie für hydrophobe Substrate geeignet, die bei Benetzen mit alkalischen Waschlösungen wenig oder im wesentlichen kein Wasser aufnehmen. Dabei handelt es sich um Materialien wie Glas, Metall, lackiertes oder beschichtetes Papier bzw. entsprechende Pappen und vor allem um Kunststoffe, z.B. Polyethylenterephthalat (PET), Polycarbonat, Polyethylen (PE), Polypropylen (PP), Polyvinylchlorid (PVC) oder Polystyrol. Daraus können Behälter hergestellt werden, wie Hohlkörper, Kartonagen, Folien, Kisten oder Verpackungen. Bei den zu verklebenden Substraten im Sinne der vorliegenden Erfindung handelt es sich insbesondere um rotationssymmetrische Hohlkörper, wie Becher, Dosen, Flaschen, Kartuschen oder auch um quaderförmige Verpackungen. Insbesondere können Verklebungen von recyclisierbaren Kunststoffmaterialen, Glas oder Metallwerkstoffen mit Etiketten durchgeführt werden. Auch Kunststoffformteile, wie Kästen oder Transportboxen, können mit entfernbaren Etiketten verklebt werden.

Die Etiketten bestehen meistens aus thermoplastischen Kunststoffen in Folienform, wie Polyethylen, Polypropylen, Polystyrol, Polyvinylchlorid oder organischen Polymeren, wie Cellophan. Weiterhin können die Etiketten aber auch aus Papier bestehen, gegebenenfalls als Verbundfolie mit einer Polymerfolie. Bevorzugt ist es, Etiketten aus einer Folie auf der Basis von unpolaren Kunststoffen, insbesondere von orientiertem Polypropylen (OPP) einzusetzen, sowie besonders bevorzugt Folien aus Cellophan. Es kann sich um Einschicht- oder Mehrschichtfolien handeln. Insbesondere können optisch transparente Folien als Etikettenmaterial verwendet werden. An die Form der Etiketten werden keine besonderen Anforderungen gestellt. Sie können viereckig, rund sein oder andere Formen aufweisen. Es können z.B. Rundumetiketten oder Schildetiketten sein.

Insbesondere können die Etiketten aus organischen Polymeren wie beispielsweise Cellophan bestehen. Cellulose ist in der Natur weit verbreitet. Es handelt sich dabei um ein Biopolymer aus β-1,4-verknüpften Cellobiose-Einheiten. Üblicherweise bildet die Cellulose unverzweigte wasserunlösliche Ketten. Das MolGewicht kann zwischen 50.000 bis 500.000 g/mol (bestimmbar durch GPC-Verfahren) betragen. Durch bekannte technische Verfahren wird aus Cellulose eine Viskose-Lösung hergestellt, die zu Folien verarbeitet werden kann. Durch entsprechende Auswahl der verwendeten Materialien ist es möglich, Cellulosefolien auch für Verpackungen von Lebensmitteln einzusetzen.

Es kann sich um gefärbte, bedruckte, metallisierte, farblose oder durchsichtige Folien handeln. Es können Einschicht- oder Mehrschichtfolien verwendet werden. Üblicherweise haben die Folien eine Schichtdicke zwischen 5 bis 300 µm, insbesondere zwischen 10 bis 150 µm. Folien und Verfahren zur Herstellung und Behandlung solcher Folien sind dem Fachmann bekannt.

Erfindungsgemäß müssen die Folien, beispielsweise eine Einschicht- oder eine Mehrschichtfolie, einen Cobb-Wert (20 sec.) oberhalb 0,2 g/m² pro 20 sec aufweisen, insbesondere oberhalb von 0,5 g/m² pro 20 sec. Der Cobb-Wert eines Substrates gibt an, mit welcher Geschwindigkeit flüssiges Wasser von dem Substrat aufgenommen wird. Messungen zum Cobb-Wert werden gemäß DIN-EN 20 535 (20 °C) bestimmt. Die Messdauer soll die ersten 20 sec. erfassen, die Wasseraufnahme ist nicht konstant über längere Messzeiträume.

Je höher der Cobb-Wert, desto größer ist die Wasseraufnahmefähigkeit des Etikettmaterials. Im Rahmen der Erfindung soll der Cobb-Wert (20 sec.) im allgemeinen unterhalb von 50 g/m² pro 20 sec liegen, bevorzugt unterhalb von 20 g/m²/min. Wird der Cobb-Wert zu hoch gewählt, so ist das auf dem Substrat verklebte Etikett gegenüber hoher Luftfeuchtigkeit, Schwitzwasser oder Regen anfällig und ergibt keine dauerhafte geeignete Verklebung mit dem Substrat. Weiterhin muss die Wasseraufnahme des Etiketts in einem kurzen Zeitraum sichergestellt werden, da die Abwaschvorgänge in den üblichen technischen Wiederaufbereitungsanlagen von Flaschen nur eine beschränkte Verweilzeit haben. Die in der WO 2004/069950 angegebene Messdauer von 5 min. gibt keine für die Praxis geeigneten Ergebnisse.

Eine weitere Ausführungsform der Erfindung besteht darin, dass das geeignete Etikettenmaterials perforiert ist, d.h. Löcher oder Aussparungen auf der Fläche besitzt. Die Perforationsfläche soll kleiner als 10 % der mit dem Klebstoff beschichteten Fläche des Etiketts betragen, insbesondere zwischen 0,01 bis 5 %, insbesondere unterhalb von 1 %. Es ist darauf zu achten, dass die Perforation möglichst einheitlich und gleichmäßig erfolgen soll, weiterhin ist es bevorzugt, dass die Perforationslöcher oder Aussparungen klein im Verhältnis zu der perforierten Fläche sind. Insbesondere ist eine höhere Anzahl von Perforationslöchern mit kleineren Flächen bevorzugt. Insbesondere sollen die Perforationslöcher kleiner als 1 mm sein, insbesondere kleiner als 0,5, ganz besonders bevorzugt kleiner 0,2 mm. Der Abstand zwischen den Perforationen soll so bemessen sein, dass durch die Perforationslöcher in kurzer Zeit die Waschlösung zwischen verklebten Etikett und Substratoberfläche gelangen kann. Der Abstand kann deshalb unterhalb von 10 mm betragen, insbesondere unterhalb von 5 mm. Diese Ausführungsform kann auch zusätzlich zu der Auswahl des Etikettenmaterials eingesetzt werden.

Wenn eine ausreichende Anzahl von Perforationslöcher vorhanden ist, können auch Etiketten eingesetzt werden, die einen niedrigeren Cobb-Wert als 0,3 g/m² pro 20 sec. aufweisen. Die Wiederablösbarkeit durch die Waschlösung ist dann durch eine Diffusion ausgehend von den Kanten bzw. den Perforationsöffnungen des Etiketts möglich. Insbesondere geeignet für perforierte Etiketten sind durchsichtige Etiketten zur Verklebung mit durchsichtigen Substraten, so dass die perforierte Oberfläche optisch nicht weiter auffällt.

Weiterhin kann das Eindringen von Wasser in die Klebstoffschicht durch mechanische Änderungen unterstützt werden. Wellen sich Randbereiche des Etiketts nach außen, wird die benetzbare Oberfläche erhöht. Vergrößert sich die Länge eines Etiketts in dem Waschprozess, können sich Falten bilden, unter denen ein schneller Angriff der Waschflüssigkeit ermöglicht wird.

Ein Gegenstand der Erfindung sind also Etiketten, die mit einem erfindungsgemäß geeigneten Haftklebstoff beschichtet sind. Dabei soll das Material der Etiketten eine schnelle Wasseraufnahme aufweisen oder eine gute Durchlässigkeit von Wasser durch Öffnungen oder Perforationen in den Etiketten ermöglichen. Wenn Etikettenmaterial mit einem hohen Cobb-(20 sec.)-Wert ausgewählt wird, kann die Wasserlöslichkeit des Klebstoffs niedriger liegen, ist die Wasseraufnahme geringer, muss die Löslichkeit des Klebstoffs höher liegen.

Bei dem erfindungsgemäßen geeigneten Haftklebstoff handelt es sich um einen in wässriger Lösung löslichen oder dispergierbaren Haftklebstoff auf Basis von 70 bis 95 Gew.-% mindestens eines strahlenvernetzbaren Basispolymeren, 5 bis 30 Gew.-% wenigstens eines Harzes, 0 bis 30 Gew.-% von üblichen Hilfs- und Zusatzstoffes, wobei die Summe der Komponenten 100 Gew.-% ergeben soll.

Unter Basispolymeren werden synthetische Polymere verstanden, wodurch für die Schmelzklebstoffe wichtige Eigenschaften wie Haftung, Festigkeit und Temperaturverhalten im wesentlichen bestimmt werden. Solche Polymere können beispielsweise sein Polykondensate, wie Polyamidharze, Copolyamide, Polyetheramide, Polyesteramidimide, Polyetheresteramide, Polyesteramide und Polyester; Polymerisate wie Ethylen-, Ethylen/Vinylacetat-, Ethylen/Acrylat-, Propylen-, (Meth)Acrylatcopolymere; Styrolcopolymere, wie SIS-, SBS-, SIBS, SEBS-Copolymere; amorphes oder metallocene-katalysierte PE- oder PP-Homo- oder Copolymere; Polyaddukte, wie ggf. lineare, nicht reaktive Polyurethane. Bevorzugt sind Polymere, die durch radikalische Polymerisation erhältlich sind. Insbesondere sind Polymere auf Basis von (Meth)acrylsäureestern geeignet. Diese Polymere müssen erfindungsgemäß noch ungesättigte Doppelbindungen aufweisen, die durch Strahlung vernetzen können. Weiterhin ist es bevorzugt, dass die Polymere in der Polymerkette funktionelle Gruppen aufweisen, die als Initiator bei der Strahlungsreaktion wirken können.

Die Menge des Basispolymeren soll bevorzugt zwischen 75 bis 90 Gew.-% betragen, bezogen auf den Haftklebstoff insgesamt. Es kann sich um ein Basispolymeres handeln, es können aber auch mehrere im Gemisch eingesetzt werden. Die Polymere können auch Gruppen aufweisen, die hydrophile Eigenschaften zeigen, und eine Löslichkeit in wässrigen Lösungen verstärken. Diese können bei der Synthese durch die Auswahl der Monomere direkt einpolymerisiert werden, es ist aber auch möglich sie durch nachträgliche Modifikation des Polymergerüsts einzureagieren. Insbesondere ist es bevorzugt, wenn durch den Zufall der als Initiator wirkenden Gruppe solche polaren Gruppen gebildet werden, die die Löslichkeit des Basispolymeren hervorrufen. Dabei kann es sich um polare Gruppen handeln, es können auch in ionische Gruppen überführbare Gruppen vorhanden sein.

Ggf. ist es möglich, dass in dem Haftklebstoff zwischen 0 bis 40 %, insbesondere bis 30 % bezogen auf das Basispolymer, eines weiteren Polymeren enthalten ist, das polare Gruppen aufweist. Insbesondere bevorzugt sind dabei OH-Gruppen terminierte Polyurethane, Carboxylgruppen- oder Sulfonsäuregruppen-haltige Polyester, Carboxylgruppen-haltige Acrylatcopolymere. Diese Polymere sollen eine hohe Zahl von polaren Gruppen aufweisen. Beispiele dafür sind Polyester auf Basis aromatischer Dicarbonsäuren wie Phthalsäure oder Terephthalsäure, mit mindestens einem Polyol aus der Gruppe Neopentylglykol, Glycerin, Pentaerythrit oder niedermolekulare Polyetherpolyole, insbesondere bevorzugt sind Ester auf Basis sulfogruppenhaltiger aromatischer Dicarbonsäuren; (Meth)Acrylsäure-Homo und/oder Copolymeren auf Basis von (Meth)Acrylestern mit C₁ bis C₁₂-Alkanolen; Polyvinylalkohol mit einer Molmasse von über 1000 g/mol und/oder Polyvinylalkylether mit 1 bis 14 Atomen in der Alkylgruppe; Polyurethane mit mindestens einer terminalen OH-Gruppe, mit einem Erweichungspunkt zwischen 50 bis 120°C.

Außer dem Basispolymeren muss noch mindestens ein Harz im Haftschmelzklebstoff enthalten sein. Solche Harze machen den Klebstoff dauerklebrig und verbessern die Verträglichkeit der Schmelzklebstoff-Komponenten. Dieses Harz wird im allgemeinen in einer Menge von 5 bis 30 Gew.-% eingesetzt. Es handelt sich dabei beispielsweise um Hydroabietylalkohol und seine Ester, insbesondere seine Ester mit aromatischen Carbonsäuren wie Terephthalsäure und Phthalsäure; vorzugsweise modifizierte Naturharze wie Harzsäuren aus Balsamharz, Tallharz oder Wurzelharz, z.B. vollverseiftes Balsamharz oder Alkylester von gegebenenfalls teilhydriertem Kolophonium mit niedrigen Erweichungspunkten wie z.B. Methyl-, Diethylenglykol-, Glycerin- und Pentaerythrit-Ester ; Acrylsäure-Copolymerisate, vorzugsweise Styrol-Acrylsäure-Copolymere und Harze auf Basis funktioneller Kohlenwasserstoffharze. Es können auch Derivate solcher Harze eingesetzt werden, wie disproportionierte, teilhydrierte, hydrierte oder durch Verseifung oder Umesterung modifizierte Harze.

Die erfindungsgemäß geeigneten Harze sollen eine gute Haftung sicherstellen. Es können die bekannten Harze ausgewählt werden. Insbesondere können sie auch ggf. zusätzlich eine gute Wasserlöslichkeit aufweisen. Das kann durch ionische oder in ionische Gruppen überführbare Gruppen und/oder polare Gruppen am Harz beeinflusst werden. Wenn solche Harze gewählt werden soll die Säurezahl zwischen 90 bis 220 mg KOH/g (nach DIN 53 402) betragen. Eine hohe Säurezahl kann die Löslichkeit des Klebstoffs erhöhen. Dabei ist es dann möglich, die Löslichkeit so zu erhöhen, dass eine Wiederauflösung der Klebstoffschicht auch in erwärmtem Wasser, ggf. unterstützt mit Tensiden, erreicht werden kann. Harze mit und ohne Säuregruppen sind dem Fachmann bekannt.

Als erfindungsgemäß zu verwendende Harzkomponente sind bevorzugt ganz oder teilhydrierte oder nicht modifizierte Kolophonium-Glycerinester geeignet. Eine andere Ausführungsform verwendet Kolophonium-Formaldehyd-Umsetzungsprodukte, die vorzugsweise eine Säurezahl von mindestens 120, insbesondere von 140 bis 200 mg KOH/g aufweisen. Der Erweichungspunkt der Harze soll mindestens 50°C, vorzugsweise von 65 bis 85°C (nach DIN 52011) betragen. Es kann ein Harz eingesetzt werden oder auch Mischungen.

Die Menge des Harzes in dem Haftklebstoff sollte vorzugsweise von 10 bis 25 Gew.-% liegen, bezogen auf den Schmelzklebstoff insgesamt, um ein schnelles Ablösen des Etiketts von der Substratoberfläche zu bewirken.

Als Additive können in den Haftschmelzklebstoffen die bekannten Additive und Hilfsstoffe eingesetzt werden. Dabei handelt es sich beispielsweise um Wachse, Füllstoffe, Weichmacher, Initiatoren, Stabilisatoren, Antioxidantien und/oder Farbstoffe.

Als Weichmacher können die bekannten, nicht reaktiven Weichmacher eingesetzt werden. Der Weichmacher ist in dem Schmelzklebstoff im allgemeinen in einer Konzentration von 0 bis 30, vorzugsweise in einer Konzentration bis 20 Gew.-% enthalten.

Geeignete Weichmacher sind ein- oder mehrwertige Alkohole, vorzugsweise Glykolmonophenylether, Hexamethylenglykol, Glycerin und insbesondere Polyalkylenglykole mit einer Molmasse von 200 bis 6 000 g/mol, insbesondere bis etwa 1 000, vorzugsweise bis etwa 600. Es können auch Ester als Weichmacher eingesetzt werden, z.B. flüssige Polyester und Glycerinester. Schließlich können auch Alkylmonoamine und Fettsäuren mit vorzugsweise 8 bis 36 C-Atomen eingesetzt werden. Auch Weißöl und naphthenisches Mineralöl sind geeignet.

Bevorzugt werden Weichmacher mit hydrophilen Gruppen eingesetzt, insbesondere Polyalkylenglykole und Derivate. Für Anwendungen im Zusammenhang mit Nahrungsmittelverpackungen sind Weißöle bevorzugt.

Füllstoffe können eingesetzt werden, um anwendungstechnische oder klebetechnische Eigenschaften zu verbessern. Es handelt sich um feste, inerte Stoffe, wie beispielsweise Kreide, Titandioxid, Siliciumdioxid oder andere meist farblose Pigmente. Dabei ist sicherzustellen, dass die strahlenvernetzende Reaktion nicht beeinträchtigt wird. Der Anteil im Haftklebstoff ist meist unterhalb von 10 Gew.-%, insbesondere ist kein Füllstoff enthalten.

Als weitere Komponente können dem Haftklebstoff natürliche, chemisch modifizierte oder synthetische Wachse zugesetzt werden. Hierbei können sämtliche Wachse eingesetzt werden, die mit dem Basispolymeren verträglich sind. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Insbesondere werden vorzugsweise petrochemische Wachse wie Petrolatum, Paraffinwachse, Mikrowachse sowie synthetische Wachse, insbesondere Polyethylenwachse mit Schmelzpunkten zwischen 85 und 140 °C, Paraffinwachse mit Schmelzpunkten im Bereich von 45 bis 70°C, mikrokristallin Wachse mit Schmelzpunkten im Bereich von 60 bis 95 °C sowie synthetische Fischer-Tropsch-Wachse mit Schmelzpunkten im Bereich von 100 bis 115 °C eingesetzt. Die Menge der Wachse im Haftklebstoff beträgt im allgemeinen 0 bis 25, vorzugsweise 0 bis 10 Gew.-%.

Als weiterer Hilfsstoff können Stabilisatoren vorhanden sein. Sie haben die Aufgabe, die reaktionsfähigen Monomere an einer unerwünschten bzw. vorzeitigen Reaktion zu hindern und die Polymere während der Verarbeitung vor Zersetzung zu schützen. Sie werden üblicherweise Mengen bis zu 2 Gew.-%, vorzugsweise in Mengen von etwa 0,1 bis 1,0 Gew.-% dem Haftklebstoff beigefügt.

Ggf. können in dem Haftklebstoff noch Initiatoren enthalten sein. Diese sollen die Vernetzung durch aktinische Strahlung beschleunigen. Insbesondere bei UV-Strahlung sind solche Initiatoren zweckmäßig. In einer besonderen Ausgestaltungsform sind Gruppen, die als Initiator wirken können, am Basispolymeren anreagiert enthalten. Die geeigneten Additive und Zusatzstoffe sind dem Fachmann bekannt.

Ein weitere Gegenstand der vorliegenden Erfindung ist die Verwendung eines Haftklebstoffs auf einem erfindungsgemäßen Etikett bestehend aus 70 bis 95 Gew.-% mindestens eines Basispolymeren, das durch Strahlung vernetzbare Gruppen enthalten muss, 5 bis 30 Gew.-% mindestens eines Harzes, 0 bis 40 % bezogen auf das Basispolymer eines zusätzlichen Polymeren, das hydrophile und/oder ionische Gruppen aufweist, aus der Gruppe der Polyester, Polyurethane, Poly(meth)acrylsäure-Alkylester, Acrylsäure-Homo- und/oder Copolymerisate und/oder Vinylpolymere, 0 bis 30 Gew.-% von üblichen Hilfs- und Zusatzstoffes, wobei die Summe der Komponenten 100 Gew.-% ergibt. Dieser Klebstoff ist bei 25 °C viskos oder es kann sich um einen Schmelzklebstoff handeln. Nach dem Auftragen auf das Substrat wird der Klebstoff einer Vernetzung durch aktinische Strahlung unterworfen, beispielsweise UV- oder Elektronenstrahlung. Die Strahlung wird so ausgewählt, dass der Haftklebstoff eine Vernetzungsreaktion eingeht, d.h. es bilden sich höhermolekulare und ggf. verzweigte Polymerketten. Die Vemetzungsdichte kann über die Bestrahlungsstärke beeinflusst werden. Die Vernetzung soll im Allgemeinen nicht vollständig sein, d.h. das Polymer muss noch in Wasser löslich oder dispergierbar sein. Unabhängig von einer Theorie handelt es sich nur um eine Teilvernetzung des Polymeren. Die Bestrahlungsstärke soll bevorzugt unterhalb von 200mJ/cm² liegen, insbesondere von 15 bis 160 mJ/cm². Die Bestrahlung kann vom Fachmann in Abhängigkeit von der Anzahl der vemetzungsfähigen Gruppen und dem beabsichtigten Vemetzungsgrad gewählt werden.

In einer bevorzugten Ausführungsform ist das Basispolymer ein Poly(meth)-acrylestercopolymer, das an der Polymerkette eine oder mehrere als Initiator wirkende Gruppen enthält. Diese reagieren durch die Strahlung. Dabei entstehen funktionelle Gruppen, wie COOH, OH, oder NH-Gruppen, die dem Polymer eine hohe Wasserlöslichkeit verleihen.

Der einsetzbare Haftklebstoff ist im Allgemeinen farblos. Er ist bevorzugt Lösemittelfrei. Er kann bei Raumtemperatur viskos sein, zur Applikation wird er aber üblicherweise erwärmt. Insbesondere soll seine Viskosität von 300 mPas bis zu 50000 mPas bei 130°C (gemessen nach Brookfield, EN ISO 2555) betragen, insbesondere von 5000 bis zu 35000 mPas. Die Viskosität kann nach dem Auftragsverfahren des Klebstoffs ausgewählt werden. Während Walzenauftrag niedrigere Viskosität benötigt, kann durch Schlitzdüsenauftrag auch eine hohe Viskosität verarbeitet werden. Der Haftklebstoff zeigt ein gutes Ablöseverhalten, d.h. bei Kontakt mit der Waschlösung wird die Haftung zum Substrat vermindert.

Die einsetzbaren Haftklebstoffe können nach bekannten Verfahren hergestellt werden. Beispielsweise ist es möglich die Basispolymere zu erwärmen oder zu schmelzen. Bei erhöhter Temperatur können dann unter Rühren mit die weiteren Klebstoffbestandteile vermischt werden. Nach dem Homogenisieren können die Klebstoffe abgefüllt und abgekühlt werden. Die Klebstoffe können in geeignete Verpackungen abgefüllt, die eine Handhabung im haftklebrigen Zustand erleichtern. Solche Verfahren zur Herstellung und geeignete Verpackungsarten sind dem Fachmann bekannt. In einer Ausführungsform können die Klebstoffe auch als Schmelzklebstoffe vorliegen, d.h. sie sind bei Raumtemperatur fest.

Die geeigneten Haftklebstoffe können nach bekannten Verfahren aufgetragen werden. Dabei kann das Material der Etiketten, eine Folie, eine Mehrschichtfolie oder Papier, bahnenweise verarbeitet werden. Beispielsweise können diese Bahnen an der Oberfläche einer Vorbehandlung unterzogen werden. Es ist bekannt, solche Bahnen zu bedrucken, zu prägen, zu Mehrschichtfolien zu kaschieren oder andere Verfahren anzuwenden, um eine hochwertige Oberfläche und ein geeignetes optisches Aussehen zu erzeugen. Auf die Rückseite der Bahnen wird danach ein erfindungsgemäßer Haftschmelzklebstoff aufgetragen.

Das Auftragen kann über die gesamte Bahnen geschehen, dass heißt die ganze Oberfläche wird gleichmäßig beschichtet. Eine andere Arbeitsweise trägt den Schmelzklebstoff nur auf einzelne Teile der Bahnen auf. Das kann beispielsweise streifenförmig geschehen oder andere Muster werden auf der Bahnoberfläche aufgetragen. Das kann beispielsweise durch Rakelwerke, Breitschlitzdüsen, Druckwerke, Sprühauftrag, Walzenauftrag oder curtain, frame, Kiss oder roller coating durchgeführt werden. Nach dem Auftragen des Haftklebstoffs wird die Klebstoffschicht durch Bestrahlen vernetzt. Es entsteht ein haftklebrige Schicht. Danach kann die Bahn in geeignete Etiketten konfektioniert werden.

Eine andere Arbeitsweise formt in einem ersten Schritt die ggf. bedruckten Etiketten. Diese können danach auf der Rückseite mit einem Haftschmelzklebstoff versehen werden. Dabei können die Etiketten flächig beschichtet werden, es werden Streifen aufgetragen, insbesondere am Etikettenrand, oder es können beliebige Muster aufgebracht werden. Die Menge des Haftklebstoffs soll von 2 bis 100 g/m² betragen, insbesondere von 5 bis 50 g/m². Dabei soll der Klebstoff flüssig oder aufgeschmolzen vorliegen. Die Applikationstemperatur soll 25 bis 170°C betragen. Bei temperaturempfindlichen Substraten kann das Aufbringen auch bei niedrigeren Temperaturen erfolgen, vorzugsweise bis zu 140°C.

Im Fall der Ausgestaltungsform des Etiketts als mindestens teilweise perforierte Fläche kann das Perforieren zu verschiedenen Zeitpunkten durchgeführt werden. Beispielsweise ist es möglich, dass das bahnenförmige Material vor oder nach dem Bedrucken perforiert wird. Es ist aber auch möglich, dass erst die bedruckten oder ggf. mit dem Klebstoff beschichteten Etiketten perforiert werden. Die Perforation kann nach ästhetischen Gesichtspunkten ausgewählt werden, es ist erfindungswesentlich nur notwendig, dass auf der mit dem Haftschmelzklebstoff beschichteten Fläche eine ausreichende Perforierung vorhanden ist.

Allgemein ist eine bevorzugte Arbeitsweise, vor oder nach dem Konfektionieren der Etiketten auf die bereits mit dem Haftklebstoff beschichtete Seite eine Schutzfolie aufzubringen. Diese Schutzfolie hat die Aufgabe das Verkleben der Etiketten untereinander zu verhindern. Vor dem eigentlichen Aufkleben auf dem Etikett wird die Schutzfolie (Release-liner) entfernt. Solche Schutzfolien können aus Kunststofffolien bestehen, allgemein bekannt sind auch anti-adhäsiv beschichtete Papiere.

Eine weitere Ausführungsform des Verfahrens trägt den Haftklebstoff auf einen anti-adhäsiv beschichteten Träger auf, beispielsweise einem Silikonpapier, eine silikonisierte Folie oder einer Teflonfolie. Danach kann die Klebstoffschicht bestrahlt werden. Auf diese Klebstoffschicht werden dann die Etiketten einzeln oder als bedruckte oder unbedruckte Folienbahn aufgebracht. Dabei entstehen beschichtete Etiketten, die mit einer abtrennbaren Schutzschicht auf der Klebstoffseite versehen sind.

Erfindungsgemäß ist es möglich, die beschichteten Etiketten on-line auf die Substrate aufzukleben. Damit werden eine Lagerhaltung der Etiketten und die zusätzlichen Arbeitsschritte zum Aufwickeln und Verpacken der Etiketten vermieden. Eine erfindungsgemäße bevorzugte Arbeitsweise deckt jedoch die bereits mit dem Haftklebstoff beschichtete Seite des Etiketts mit einer Schutzfolie ab und bringt sie in eine Form, dass eine Lagerung möglich ist. Das kann beispielsweise durch stapelförmige Lagerung oder Aufrollen der Etiketten auf einem Trägermaterial geschehen, insbesondere auf der Schutzfolie. Unmittelbar vor der Verwendung zum Verkleben werden dann die Etiketten von dem Trägermaterial entfernt und auf das Substrat geklebt.

Die erfindungsgemäß hergestellten Etiketten können aus Polymeren oder Papier hergestellt sein, insbesondere aus Cellophan. Eine weitere bevorzugte Ausführungsform verwendet durchscheinende oder durchsichtige, klare Materialien als Folienmaterial. Der erfindungsgemäße Haftklebstoff soll bevorzugt ebenfalls klar sein und keine Eigenfarbe in dünner Schicht besitzen.

Das Ablösen von verklebten Etiketten in wässriger Lösung ist bekannt. Beispielsweise werden die mit einem Etikett beklebten Substrate, z.B. Flaschen, in einer Flaschenreinigungsmaschine in einer ca. 1 %igen bis 5 %igen NaOH- oder KOH-Lösung bei einer Temperatur von 40 bis zu 95°C abgelöst. Der Ablösevorgang soll dabei möglichst schnell geschehen, da die Dauer des Waschprozesses meist unterhalb von 5 min. liegt. Die wässrige Lösung kann Additive enthalten, die die Ablösung unterstützen wie Tenside, Anti-Schaum-Mittel, Flotationsmittel, oder den Verarbeitungsprozess vereinfachen. Gegebenenfalls ist es möglich auch zusätzliche Mittel zu verwenden, die eine Ablösung unterstützen, wie Strömung, mechanische Beanspruchung oder thermische Verformung der Etiketten.

Durch die erfindungsgemäß beschichteten Etiketten ist es möglich, dass in dem Reinigungsprozess die Reinigungslösung in kurzer Zeit durch das Substrat an die verklebte Fläche gelangt. Durch die Wärme und durch den intensiven Kontakt mit der Waschlösung wird der Klebstoff gelöst und verliert seine Haftkraft. Insbesondere ist festzustellen, dass der Klebstoff von der Substratoberfläche gelöst wird, d.h. die Substratoberfläche ist üblicherweise frei von Klebstoffanhaftungen. Die Löslichkeit des Klebstoffs wird vorzugsweise so ausgewählt, dass er nicht vollständig wasserlöslich ist, sondern nur seine Haftung zum Substrat verliert. Durch die in der Waschlösung und im Verfahren vorhandenen Reinigungseinrichtungen ist es dann möglich, große Anteile des Klebstoffs zusammen mit den Etiketten aus der Waschlösung zu entfernen. Dabei können an sich bekannte Additive in der Reinigungslösung das Auflösen des Klebstoffs und die Abtrennung von der wässrigen Lösung unterstützen. Damit ist eine Wiederaufarbeitung der Waschlösung erleichtert und eine erhöhte Umweltverträglichkeit kann durch das erfindungsgemäße Verfahren zum Verkleben erzielt werden. Es ist bevorzugt, wenn der Klebstoff in seiner emulgierten Form eine geringere Dichte als die Waschlösung aufweist. Damit schwimmen der Klebstoff und die abgelösten Etikett-Teile auf der Waschflüssigkeit und können besser abgetrennt werden.

Das erfindungsgemäße Verfahren findet insbesondere Anwendung im Verpackungswesen, dass heißt bei der Etikettierung von Kartons, Hohlkörpern und Folienverpackung oder Umverpackungen, wie Kisten.

Eine besonders vorteilhafte erfindungsgemäße Verwendung ist das Wiederverwerten von Einweg-Flaschen oder Mehrweg-Flaschen aus Glas oder PET. Mit dem erfindungsgemäßen Verfahren kann die Kontaktzeit mit der Waschlauge verkürzt werden, ggf. die Konzentration der Base vermindert werden und die Waschtemperatur abgesenkt werden. Durch die Verwendung des erfindungsgemäß geeigneten Klebstoffs ist die Oberfläche der Substrate weniger oder nicht verunreinigt mit anhaftenden Klebstoffresten. Es kann sich bei den Substraten um ganze Flaschen handeln, es können jedoch auch Teile solcher Behälter als Kunststoffschnitzel entsprechend bearbeitet werden.

Eine andere Ausführungsform setzt Haftklebstoffe mit einer erhöhten Wasserlöslichkeit ein, die eine hohe Löslichkeit des Basispolymeren und des Harzes aufweisen. In diesem Fall ist es möglich, dass die verklebten Etiketten nicht nur in alkalischen Lösungen, sondern auch in Wasser, ggf. in Tensid-haltigen Lösungen, bei Temperaturen zwischen 40 bis 70°C gelöst werden können.

Durch die Auswahl von geeignetem Folienmaterial der Etiketten in Verbindung mit den erfindungsgemäß geeigneten Haftklebstoffen ist es möglich, auch bei Feuchtigkeit rutschfeste, stabile Verklebungen von Etiketten auf den Substraten, insbesondere harten, wasserabweisenden Substraten, zu erzielen. Diese sind jedoch unter den bekannten Bedingungen in alkalischer wässriger Lösung gut zu entfernen. Dabei werden Substratoberflächen mit nur geringen Klebstoffresten erhalten.

Beispiel strahlungshärtender Haftklebstoff:
90 Gew.-Teilen eines Copolymeren auf Basis von Acrylatestern mit anreagierten Initiatoren (AC Resin A 204 UV) werden mit 10 Gew.-Teilen eines Harzes (Foral 85 E) unter Rühren bei ca. 120°C bis 160°C aufgeschmolzen und homogenisiert. Der Schmelzklebstoff wird portioniert und abgekühlt. Er bildet eine leicht opake Masse.

### Beispiel Verklebung:

Auf ein Etikett (7 x 5 cm) aus einer Folie auf Basis Cellophan, Schichtdicke 125 µm, Cobb-Wert 0,55 g/ m² pro 20 sec, wird der bei 120°C aufgeschmolzene Klebstoff mit einem Rakel in einer Schichtdicke von 12 g/m² aufgetragen. Der Klebstofffilm wird mit 60 mJ/cm² bestrahlt. Das Etikett wird je auf einen Probekörper aus Aluminium, Glas und PET geklebt.

Die Verklebung ist in einem Schwitzwassertest über 5 Std. stabil.

Ein Probekörper wird bei 80°C einem Wash-off-Test unterzogen. Nach 5 min. ist eine vollständige Ablösung des Etiketts zu beobachten.

### Vergleichsbeispiel Verklebung:

Es wird der gleiche Schmelzklebstoff auf ein Cellophanetikett gleicher Stärke mit einem Cobb-Wert 0,15 g / m² pro 20 sec appliziert. Das Etikett wird verklebt und auf Ablösen im alkalischen Medium getestet. Die Verklebung/ das Etikett ist nach 4 min Dauer des Wash-off-Tests zum überwiegenden Teil noch nicht abgelöst.

Ein Vergleich der Cobb-Werte der Folien bei länger andauernden Testzyklen ergibt ungeeignete Auswahlkriterien.

Folie erfindungsgemäß: Cobb (60 sec) 0,95 g/m² pro 60 sec.

Folie Vergleich: Cobb (60 sec) 1,15 g/m² pro 60 sec.

### Wash-off-Test:

Ein Behälter mit 2 % wässriger NaOH wird gerührt und auf 80°C erwärmt. Ein beschichteter Probekörper wird eingetaucht und langsam oszillierend gedreht. Es wird die Zeit bestimmt, in der sich das Etikett ablöst.

### Schwitzwassertest:

Ein innen auf 4°C gekühlter Probekörper wird in eine mit Wasser gesättigter Atmosphäre gebracht bei einer Temperatur von 40°C. Es wird die Stabilität der Verklebung beurteilt.

## Patentansprüche

1. Verfahren zum Verkleben von Etiketten auf hydrophoben Substraten, wobei auf dem Etikett oder dem Substrat auf einer dem Etikett gegenüberliegenden Fläche ganz oder teilweise ein strahlenvernetzbarer Haftklebstoff aufgetragen wird, Etikett und Substrat zusammengeführt und verklebt werden, **dadurch gekennzeichnet, dass** der Haftklebstoff vor dem Verkleben durch Bestrahlung mit aktinischer Strahlung zu einer Klebstoffschicht vernetzt wird, wobei diese Klebstoffschicht in wässriger Lösung löslich ist und das Etikett eine Folie, eine Mehrschichtfolie oder Papier umfasst, und das Etikett ausgewählt wird aus i) wasserdurchlässigen Etiketten mit einer Wasseraufnahme (Cobb Wert) größer 0,2 g/m² pro 20 sec, ii) perforierten Etiketten, die auf den verklebten Flächen eine Perforation oder Aussparungen von unter 10 % aufweisen.

2. Verfahren nach Anspruch 1, **dadurch gekennzeichnet, dass** die Bestrahlung mit UV-Strahlung oder mit Elektronenstrahlen durchgeführt wird.

3. Verfahren nach einem der Ansprüche 1 oder 2, **dadurch gekennzeichnet, dass** das Etikett bedruckt ist oder ein transparentes Etikett ist, insbesondere dass das Etikett ein Cellophanetikett ist.

4. Verfahren nach einem der Ansprüche 1 bis 3, **dadurch gekennzeichnet, dass** der Haftklebstoff bei einer Temperatur zwischen 20 bis 170°C aufgetragen wird, bevorzugt auf das Etikett.

5. Verfahren nach einem der Ansprüche 1 bis 4, **dadurch gekennzeichnet, dass** der Haftklebstoff nach der Bestrahlung funktionelle Gruppen enthält, die eine Löslichkeit in Wasser hervorrufen.

6. Verfahren nach einem der Ansprüche 1 bis 5, **dadurch gekennzeichnet, dass** auf das Etikett nach dem Auftragen des Klebstoffs und der Vernetzung der Klebstoffschicht eine wiederablösbare Schutzschicht (release liner) aufgebracht wird und das Etikett gelagert werden kann.

7. Etikett geeignet für ein Verfahren gemäß Anspruch 1 bis 6, wobei das Etikett beschichtet ist mit einem durch aktinische Strahlung vernetzbaren Haftklebstoff, der in wässriger Lösung in der Wäme löslich oder dispergierbar ist, **dadurch gekennzeichnet, dass** das Etikett ausgewählt wird aus i) wasserdurchlässigen Etiketten mit einer Wasseraufnahme (Cobb Wert) größer 0,3 g/m² pro 20 sec, ii) perforierten Etiketten, die auf den verklebten Flächen eine Perforation oder Aussparungen von unter 10 % aufweisen.

8. Etikett nach Anspruch 7, **dadurch gekennzeichnet, dass** die Wasseraufnahme zwischen 0,5 g/m² pro 20 sec bis zu 50 g/m² pro 20 sec beträgt und/oder die Fläche der Perforationslöcher zwischen 0,1 bis 1 % der mit dem Klebstoff beschichteten Fläche beträgt.

9. Etikett nach einem der Ansprüche 7 oder 8, **dadurch gekennzeichnet, dass** der Haftklebstoff 5 bis 30 Gew.-% eines Harzes sowie 95 bis 70 Gew.-% eines Basispolymeren enthält, das durch Strahlung vernetzbare Gruppen aufweist.

10. Etikett nach Anspruch 9, **dadurch gekennzeichnet, dass** das Basispolymer nach der Vernetzung polare Gruppen, ionische Gruppen oder in ionische Gruppen überführbare Gruppen enthält.

11. Etikett nach einem der Ansprüche 9 oder 10, **dadurch gekennzeichnet, dass** in dem Haftklebstoff zwischen 10 bis 25 Gew.-% eines Harzes enthalten sind mit einer Säurezahl zwischen 90 bis 220 mg KOH/g, sowie 75 bis 90 Gew.-% eines Basispolymeren.

12. Etikett nach einem der Ansprüche 7 bis 11, **dadurch gekennzeichnet, dass** das Etikett aus einer Kunststoff- oder Cellophanfolie besteht oder aus Papier.

13. Etikett nach einem der Ansprüche 7 bis 12, **dadurch gekennzeichnet, dass** das Etikett auf der mit dem Klebstoff beschichteten Seite mit einer entfernbaren Schutzfolie versehen ist.

## Claims

1. A method of adhesively bonding labels to hydrophobic substrates, in which a radiation-crosslinkable pressure-sensitive adhesive is applied to all or part of the label or of the substrate on a surface facing the label, and label and substrate are brought together and adhesively bonded, **characterised in that** prior to adhesive bonding the pressure-sensitive adhesive is crosslinked by irradiation with actinic radiation to afford an adhesive layer, wherein said adhesive layer is soluble in aqueous solution and the label is a film, a multilayer film or paper, and the label is selected from i) water-permeable labels with a water absorption (Cobb value) greater than 0.2 g/m² per 20 sec, ii) perforated labels, which have perforations or cut-outs over less than 10% of the adhesively bonded areas.

2. Method according to claim 1, **characterised in that** the irradiation is carried out with UV light or electron beam radiation.

3. Method according to one of the claims 1 or 2, **characterised in that** the label is printed or is a transparent label, in particular that the label is a cellophane label.

4. Method according to one of the claims 1 to 3, **characterised in that** the pressure-sensitive adhesive is applied at a temperature between 20°C up to 170°C, preferably onto the label.

5. The method according to one of the claims 1 to 4, **characterised in that** after irradiation the pressure-sensitive adhesive comprises functional groups that bring about solubility in water.

6. Method according to one of the claims 1 to 5, **characterised in that** the label is provided with a release liner after application of the adhesive and the crosslinking of the adhesive layer, and that the label can be stored.

7. Label suitable for a method according to claim 1 to 6, wherein it is coated with a pressure-sensitive adhesive crosslinkable by actinic radiation, which adhesive is soluble or dispersible in aqueous solution under heat, **characterised in that**, the label is selected from i) water-permeable labels with a water absorption (Cobb value) of greater than 0.3 g/m² per 20 sec, ii) perforated labels, which have perforations or cut-outs over less than 10% of the adhesively bonded areas.

8. Label according to claim 7, **characterised in that** the water uptake is between 0.5 g/m² per 20 seconds up to 50 g/m² per 20 seconds and/or the surface of the perforated holes is between 0.1 to 1 % of the surface coated with the adhesive.

9. Label according to one of the claims 7 or 8, **characterised in that** the pressure-sensitive adhesive comprises 5 to 30 wt % of a resin and 95 to 70 wt % of a base polymer that possesses radiation-crosslinkable groups.

10. Label according to claim 9, **characterised in that** the base polymer after crosslinking comprises polar groups, ionic groups or groups that can be converted into ionic groups.

11. Label according to one of the claims 9 or 10, **characterised in that** the pressure-sensitive adhesive comprises 10 to 25 wt % of a resin with an acid number of between 90 and 220 mg of KOH/g, as well as 75 to 90 wt % of a base polymer.

12. Label according to one of the claims 7 to 11, consisting of a plastic film or cellophane film or of paper.

13. Label according to one of Claims 7 or 12, **characterised in that** it is provided with a release liner on the side that is coated with adhesive.

## Revendications

1. Procédé pour le collage d'étiquettes sur des substrats hydrophobes, un adhésif sensible à la pression réticulable par exposition à un rayonnement étant appliqué sur l'étiquette ou sur le substrat en tout ou en partie sur une surface opposée à l'étiquette, l'étiquette et le substrat étant guidés l'un vers l'autre pour être collés, **caractérisé en ce que** l'adhésif sensible à la pression est réticulé avant le collage par exposition à un rayonnement actinique pour obtenir une couche adhésive, cette couche adhésive étant soluble en solution aqueuse et l'étiquette comprenant une feuille, une feuille multicouche ou du papier, et l'étiquette étant choisie parmi i) des étiquettes perméables à l'eau dont la capacité d'absorption d'eau (valeur de Cobb) est supérieure à 0,2 g/m² par 20 sec ; ii) des étiquettes perforées qui présentent, sur les surfaces collées, une perforation ou des évidements à raison de moins de 10 %.

2. Procédé selon la revendication 1, **caractérisé en ce que** l'exposition au rayonnement a lieu avec un rayonnement ultraviolet ou avec des faisceaux électroniques.

3. Procédé selon l'une quelconque des revendications 1 ou 2, **caractérisé en ce que** l'étiquette est imprimée ou représente une étiquette transparente, l'étiquette représentant en particulier une étiquette de cellophane.

4. Procédé selon l'une quelconque des revendications 1 à 3, **caractérisé en ce que** l'adhésif sensible à la pression est appliqué à une température entre 20 et 170 °C, de préférence sur l'étiquette.

5. Procédé selon l'une quelconque des revendications 1 à 4, **caractérisé en ce que** l'adhésif sensible à la pression contient, après l'exposition aux rayonnements, des groupes fonctionnels qui engendrent une solubilité dans l'eau.

6. Procédé selon l'une quelconque des revendications 1 à 5, **caractérisé en ce que**, après l'application de l'adhésif et après la réticulation de la couche adhésive, on applique sur l'étiquette, une couche de protection pelliculable (release liner = couche antiadhésive), l'étiquette pouvant ensuite être entreposée.

7. Étiquette pour un procédé selon les revendications 1 à 6, dans laquelle l'étiquette est enduite d'un adhésif sensible à la pression, réticulable par exposition à un rayonnement actinique, l'adhésif étant soluble ou apte à être dispersé dans une solution aqueuse en présence de chaleur, **caractérisée en ce que** l'étiquette est choisie parmi i) des étiquettes perméables à l'eau dont la capacité d'absorption d'eau (valeur de Cobb) est supérieure à 0,3 g/m² par 20 sec ; ii) des étiquettes perforées qui présentent, sur les surfaces collées, une perforation ou des évidements à raison de moins de 10 %.

8. Étiquette selon la revendication 7, **caractérisée en ce que** l'absorption d'eau s'élève entre 0,5 g/m² par 20 sec et 50 g/m² par 20 sec et/ou la surface des trous de perforation représente entre 0,1 et 1 % de la surface enduite avec l'adhésif.

9. Étiquette selon la revendication 7 ou 8, **caractérisée en ce que** l'adhésif contient de 5 à 30 % en poids d'une résine et de 95 à 70 % en poids d'un polymère de base qui présente des groupes réticulables par exposition à un rayonnement.

10. Étiquette selon la revendication 9, **caractérisée en ce que** le polymère de base contient, après la réticulation, des groupes polaires, des groupes ioniques ou bien à des groupes aptes à être transformés en groupes ioniques.

11. Étiquette selon la revendication 9 ou 10, **caractérisée en ce que** l'adhésif sensible à la pression contient entre 10 et 25 % en poids d'une résine, possédant un indice acide entre 90 et 220 mg de KOH/g, et de 75 à 90 % en poids d'un polymère de base.

12. Étiquette selon l'une quelconque des revendications 7 à 11, **caractérisée en ce que** l'étiquette est constituée d'une feuille de matière synthétique ou de cellophane, ou bien de papier.

13. Étiquette selon l'une quelconque des revendications 7 à 12, **caractérisée en ce que** l'étiquette est munie, sur le côté enduit avec l'adhésif, d'une feuille de protection qui peut être retirée.
